# EUROPEAN PATENT APPLICATION

(11) **EP 4 560 569 A1**
(43) Date of publication of application: **28.05.2025**
(21) Application number: 23383218.7
(22) Date of filing: 27.11.2023
(51) Int. Cl.: G06T 7/00, A61B 17/12

(54) **DIGITALLY EXPLORING A BRAIN VASCULAR STRUCTURE**

(71) Applicant: Hospital Sant Joan de Deu, 08950 Esplugues de Llobregat Barcelona (ES)
(72) Inventor: MUNUERA DEL CERRO, Jose Luis, 08950 ESPLUGUES DE LLOBREGAT (ES); BERNAUS TOMÉ, Sandra, 08950 ESPLUGUES DE LLOBREGAT (ES); MATA MIQUEL, Christian, 08950 ESPLUGUES DE LLOBREGAT (ES); STEPHAN-OTTO ATTOLINI, Christian, 08950 ESPLUGUES DE LLOBREGAT (ES); VALLS ESTEVE, Arnau, 08950 ESPLUGUES DE LLOBREGAT (ES); MACULE GONZALEZ, Raul, 08025 BARCELONA (ES); CEBRIAN HERRERA, Natalia, 08025 BARCELONA (ES); PUIG QUER, Gemma, 08025 BARCELONA (ES); VILA OLIVA, Marc Manel, 08025 BARCELONA (ES)
(74) Representative: ZBM Patents - Zea, Barlocci & Markvardsen

(57) **Abstract**

Methods are provided of digitally exploring a vascular structure of a brain. Such methods comprise segmenting a digital medical image of the brain to determine vascular pixels or voxels which are those pixels or voxels belonging to the vascular structure in the digital medical image; producing, based on skeletonizing the segmented digital medical image, a brain vascular model modelling vascular features of the vascular structure; receiving definition data from a user to define a first Region of Interest, ROI, or Volume of Interest, VOI, and a second ROI or VOI in either the digital medical image or the brain vascular model; and comparing vascular features in the first ROI or VOI with vascular features in the second ROI or VOI. Exploring systems, computer systems and computer programs that are suitable for performing such exploring methods are also provided.

## Description

The present disclosure relates to methods of digitally exploring a vascular structure of a brain, and to systems and computer programs suitable for performing said methods.

### BACKGROUND

There is a lack of knowledge in neurovascular diseases that cause brain injuries such as ischaemic, haemorrhagic strokes and thromboses in humans. These injuries lead to high mortality and morbidity in the population. For this reason, reliable digital exploration of brain vascular structures is crucial in medical discipline.

Technologies to explore and accordingly assess vascular structures or dispositions are known in the prior art. Brain vascular structures present specificities that make them someway particular from exploration perspective. Such exploring technologies are still improvable, especially in the case of brain vascular structures.

An object of this disclosure is to provide new methods, systems and computer programs aimed at improving prior art manners of digitally exploring a brain vascular structure.

### SUMMARY

In an aspect, methods are provided of digitally exploring a vascular structure of a brain. These methods (also denominated exploring methods herein) comprise segmenting a digital medical image of the brain to determine vascular pixels or voxels which are those pixels or voxels belonging to the vascular structure in the digital medical image, and producing, based on skeletonizing the segmented digital medical image, a brain vascular model modelling vascular features of the vascular structure.

Such exploring methods further comprise receiving definition data (from, e.g., a user) to define a first Region of Interest (ROI) or Volume of Interest (VOI) and a second ROI or VOI in either the digital medical image or the brain vascular model, and comparing vascular features in the first ROI or VOI with (or and or to) vascular features in the second ROI or VOI.

Exploring methods proposed herein based on comparing different brain regions/volumes with each other have been experienced by the inventors to be very advantageous in comparison to already known technologies to explore and assess brain vascular structures. More than two regions/volumes may be compared on a one-to-one basis in exploring methods according to present disclosure. The innovative manner of digitally exploring brain vascular dispositions based on comparison of ROIs/VOIs enables medical staff to perform more accurately and efficiently than with current tools aimed at same or similar end of assessing brain blood vessels.

In examples, the receiving of the definition data (from, e.g., a user) to define the first ROI or VOI and the second ROI or VOI in the digital medical image may be performed before the segmenting of the digital medical image, in which case the defined first ROI or VOI and second ROI or VOI may be preserved in the segmenting of the digital medical image, the producing of the brain vascular model and the comparing of vascular features. Alternatively, the receiving of the definition data from the user to define the first ROI or VOI and the second ROI or VOI in the brain vascular model may be performed after the producing of the brain vascular model and before the comparing of vascular features.

In some implementations, the definition data may include freestanding data to define the first ROI or VOI in standalone manner and relative data to define the second ROI or VOI relatively to the (defined) first ROI or VOI or, alternatively, first standalone data to define the first ROI or VOI in standalone manner and second standalone data to define the second ROI or VOI also in standalone manner. For example, taking into account that the brain has two hemispheres, the freestanding data may include data specifying that the first ROI or VOI is in one of the hemispheres, and the relative data includes data specifying that the second ROI or VOI corresponds to a ROI or VOI equivalent to the first ROI or VOI but in the other hemisphere.

In configurations, the comparing of vascular features may include performing a symmetry comparison between the vascular features in the first ROI or VOI and the vascular features in the second ROI or VOI so as to, e.g., detect symmetry abnormalities or differences.

The digital medical image may be, e.g., a dynamic medical image representing blood flow through the vascular structure, in such a manner that blood flow may be quantified from the dynamic medical image, vascular parts whose blood flow has been quantified may be identified in the brain vascular model, and each of said identified vascular parts may be labelled with a label denoting its quantified blood flow. Vascular parts with quantified blood flow and accordingly labelled may include, e.g., end-nodes, terminal-nodes, branches, or portions thereof. Said labelling may be a colour-renderable labelling, in such a manner that each of the labels is renderable in one or another colour depending on its quantified blood flow. Symmetry comparison of blood flow through different brain regions may be a valuable source of information for medical staff.

According to examples, the brain vascular model may be produced by determining a centerline-based skeleton of the vascular structure from the segmented digital medical image, determining vascular features from the centerline-based skeleton (and, in some cases, from the segmented digital medical image), and producing the brain vascular model from the determined vascular features. Different vascular features may be derived to construct the model such as, e.g., end-nodes, non-terminal nodes, branches, branch Euclidean distances, branch real distances, branch tortuosities, pixel/voxel associated radii, branch/node average radii, quantified blood flow, vascular area/volume in ROI/VOI, vascular fractal dimension in ROI/VOI, etc. based on computing or calculation principles described in other parts of the disclosure.

In a further aspect, systems are provided for digitally exploring a vascular structure of a brain. Such systems (also denominated exploring systems herein) comprise a segmenter module, a modeller module, a receiver module and a comparator module.

The segmenter module is configured to segment a digital medical image of the brain to determine vascular pixels or voxels which are those pixels or voxels belonging to the vascular structure in the digital medical image. The modeller module is configured to produce, based on skeletonizing the segmented digital medical image, a brain vascular model modelling vascular features of the vascular structure. The receiver module is configured to receive definition data from a user to define a first Region of Interest (ROI) or Volume of Interest (VOI) and a second ROI or VOI in either the digital medical image or the brain vascular model. The comparator module is configured to compare vascular features in the first ROI or VOI with vascular features in the second ROI or VOI.

Exploring systems are suitable or configured to perform exploring methods proposed herein, so same or similar functional principles and advantages as the ones described with reference to exploring methods may be attributed to such exploring systems.

In a still further aspect, computer programs are provided comprising program instructions for causing a system or computer system or controller to perform (exploring) methods of digitally exploring a vascular structure of a brain, such as those described in other parts of the disclosure. These computer programs (also denominated exploring computer programs herein) may be embodied on a storage medium and/or carried on a carrier signal. Exploring computer programs are suitable or configured to perform exploring methods proposed herein, so same or similar functional fundamentals and advantages as the ones described with reference to exploring methods may be attributed to such exploring computer programs.

In a yet further aspect, computing systems are provided for digitally exploring a brain vascular structure, said computing systems comprising a memory and a processor, embodying instructions stored in the memory and executable by the processor, and the instructions comprising functionality or functionalities to execute methods of digitally exploring a vascular structure of a brain, such as those described in other parts of the disclosure. Such computing systems (also denominated exploring computing systems herein) are suitable or configured to perform exploring methods described herein, so same or similar functional principles and advantages as the ones described with reference to exploring methods may be attributed to such exploring computing systems.

### BRIEF DESCRIPTION OF THE DRAWINGS

Non-limiting examples of the disclosure will be described in the following, with reference to the appended drawings, in which:
Figure 1 is a block diagram schematically illustrating (exploring) systems for digitally exploring a brain vascular structure according to examples.
Figure 2 is a flow chart schematically illustrating (exploring) methods of digitally exploring a vascular structure of a brain according to examples.
Figure 3 is a block diagram schematically illustrating other (exploring) systems for digitally exploring a brain vascular structure according to examples.
Figure 4 is a flow chart schematically illustrating other (exploring) methods of digitally exploring a vascular structure of a brain according to examples.

### DETAILED DESCRIPTION OF EXAMPLES

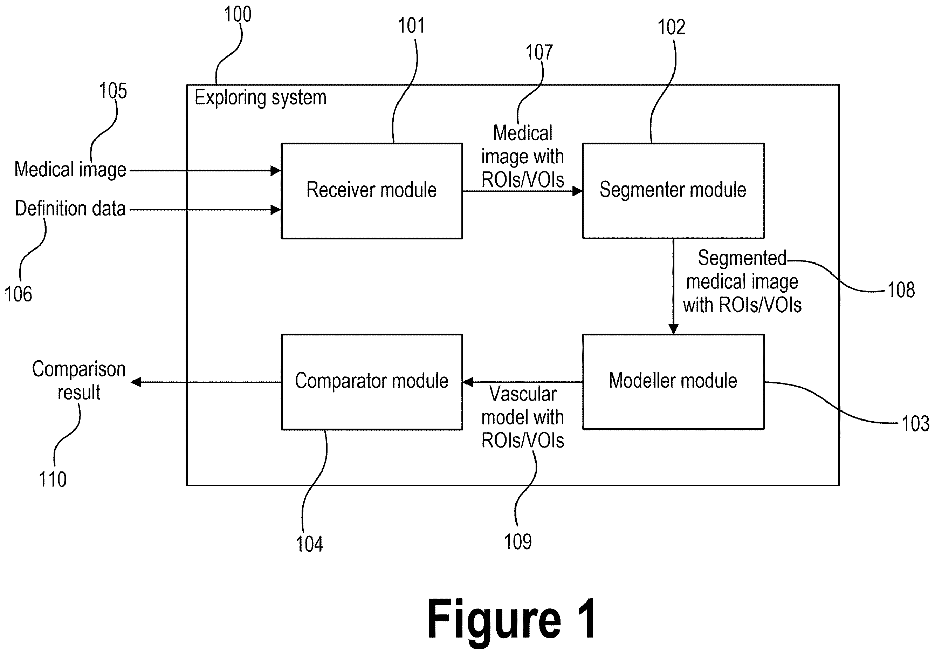

Figure 1 is a block diagram schematically illustrating (exploring) systems 100 for digitally exploring a brain vascular structure (represented) in a digital medical image, according to examples. The digital medical image 105 may be a 2D image or a 3D image, either static (without time dimension) or dynamic (with time dimension or sequenced static images). The digital medical image 105 may thus be, e.g., a DICOM image (raw image), said type of images including RM Time of Flight sequences, Phase Contrast and Dynamic MRA, angiography (DSA), etc. Dynamic MRA and DSA include time dimension. The digital medical image 105 may be formed by pixels if it is a 2D image or may be formed by voxels if it is a 3D image and, in some examples, it may be pre-processed based on an adaptive local filter to eliminate or attenuate distorting noise.

As shown in the figure, exploring systems 100 may include a receiver module 101, a segmenter module 102, a modeller module 103 and a comparator module 104.

The receiver module 101 may be configured to receive definition data 106 (from, e.g., a user) to define a first ROI or VOI and a second ROI or VOI in/on the digital medical image 105 which may also be received by the receiver module 101. ROls may be defined if the digital medical image 105 is a 2D image. VOls may be defined if the digital medical image 105 is a 3D image.

Definition data 106 may include freestanding data to define the first ROI or VOI in standalone manner and relative data to define the second ROI or VOI relatively to the defined first ROI or VOI. Freestanding data may refer to spatial or geometric data fully defining the first ROI or VOI in/on the digital medical image 105 in standalone manner, i.e., first ROI or VOI is defined only by the freestanding data. Relative data may refer to data defining the second ROI or VOI in relation to (or relative to, or with respect to) the already defined first ROI or VOI.

Relative data may include, e.g., data indicating that the second ROI or VOI corresponds to same region/volume as the first ROI or VOI but in the other brain hemisphere, or that the second ROI or VOI corresponds to posterior region/volume with respect to the first ROI or VOI, or that the second ROI or VOI corresponds to anterior region/volume with respect to the first ROI or VOI, or that the second ROI or VOI is same region/volume as the first ROI or VOI but displaced certain degrees or distance or rotated or translated with respect to the first ROI or VOI, etc. These ROI or VOI definition approach based on freestanding data to define the first ROI or VOI and relative data to define the second ROI or VOI may be denominated freestanding and relative approach herein.

Alternative to the above freestanding and relative approach, definition data 106 may include first standalone data to define the first ROI or VOI in standalone manner and second standalone data to define the second ROI or VOI in standalone manner. This other approach may be denominated double standalone approach herein, in which first ROI/VOI and second ROI/VOI are defined each with definition data independent from each other, i.e., with no definition relative to each other. Combinations of the freestanding and relative approach and the double standalone approach are also possible.

Once first and second ROIs/VOIs have been defined in/on the digital medical image 105, the receiver module 101 may output the digital medical image with defined ROIs/VOIs 107 and provide it to the segmenter module 102.

The segmenter module 102 may be configured to segment the digital medical image with defined ROIs/VOIs 107 to determine vascular pixels (in case of 2D image) or voxels (in case of 3D image) which are those pixels/voxels belonging to the vascular structure in the digital medical image with defined ROIs/VOIs 107.

Segmentation may be performed by the segmenter module 102 in any manner known in the prior art. For example, the segmenter module 102 may be configured to generate a histogram of intensities from the digital medical image with ROIs/VOIs 107, whose X axis may represent intensities or ranges of intensities and its Y axis may represent number of pixels/voxels within each range. The segmenter module 102 may be further configured to generate a population of pixels/voxels each assigned to the range of intensities to which it belongs, and to identify sub-populations of pixels/voxels (e.g., at least background pixels/voxels and foreground pixels/voxels). Said identification of sub-populations may be performed (by the segmenter module 102) using, e.g., any known mathematical technique suitable for identifying groups with intensities or ranges of close or similar intensities such as, e.g., clustering , statistical distribution, etc.

The segmenter module 102 may be still further configured to label each of the identified sub-populations with a unique identifier value for said sub-population. For example, said labelling may represent at least two sub-populations: background label (with, e.g., label equal to 0) and foreground label (with, e.g., label equal to 1), the former representing pixels/voxels not belonging to the vascular structure in the digital medical image 107 and the latter representing pixels/voxels (of interest) belonging to the vascular structure in the digital medical image 107.

Once segmentation has been completed, the segmenter module 102 may output segmented medical image with defined ROIs/VOIs 108 which may, e.g., be formed by background pixels/voxels (e.g., 0-labelled pixels/voxels) and foreground pixels/voxels (e.g., 1-labelled pixels/voxels). The segmenter module 102 may be further configured to provide the segmented medical image with defined ROIs/VOIs 108 to the modeller module 103.

The modeller module 103 may be configured to produce a brain vascular model with ROIs/VOIs 109 modelling vascular features of the vascular structure, said producing based on skeletonizing the segmented medical image with ROIs/VOIs 108. The skeletonizing may be, e.g., a centerline-based skeletonizing and the obtaining of the brain vascular model with ROIs/VOIs 109 may include determining vascular features (of the vascular structure) and producing the brain vascular model with ROIs/VOIs 109 based on the determined vascular features. The vascular features in the brain vascular model with ROIs/VOIs 109 may be determined from the centerline-based skeleton and/or from the segmented medical image with defined ROIs/VOIs 108.

Skeletonizing may start from the segmented medical image 108 which may have background (or 0-labelled) pixels/voxels and foreground (or 1-labelled) pixels/voxels. Centerline may then be identified within the pixels/voxels of interest (or foreground pixels/voxels) grouped by proximity and within a contour formed by the foreground pixels/voxels of the grouping. For example, circumscribed sphere within each group or cluster of foreground pixels/voxels may be determined and centerpoint of the sphere may be designated as part of the centerline. Skeleton may be inferred or may result from the identified centerline formed by foreground pixels/voxels determined as centerpoint of circumscribed spheres.

Vascular features forming the brain vascular model (with ROIs/VOIs) 109 may include vascular end-nodes, vascular non-terminal nodes, vascular branches, Euclidean distance of vascular branches, real distance of vascular branches, tortuosity of vascular branches, radii associated to skeleton's pixels/voxels, average radii of vascular branches, vascular structure's area or volume in ROI/VOI, vascular structure's fractal dimension in ROI/VOI, quantified blood flow, etc. The modeller module 103 may be configured to determine the vascular features based on any known image (or pixels/voxels) processing technique taking into account following specs or principles.

Vascular end-nodes may be determined assuming that a pixel/voxel in the centerline-based skeleton belongs to a vascular end-node if said pixel/voxel has just one neighbouring or adjacent pixel/voxel within the centerline-based skeleton.

Vascular non-terminal nodes may be determined assuming that a pixel/voxel in the centerline-based skeleton belongs to a vascular non-terminal node if said pixel/voxel has more than two neighbouring or adjacent pixels/voxels within the centerline-based skeleton.

Vascular branches may be determined assuming that a pixel/voxel in the centerline skeleton belongs to a vascular branch if said pixel/voxel has just two neighbouring or adjacent pixels/voxels within the centerline-based skeleton.

Euclidean distance of a vascular branch may be determined by calculating a straight-line distance between vascular nodes delimiting the branch (end-nodes or non-terminal nodes or combination of both). Euclidean distance may be calculated for all or part of the previously determined vascular branches.

Real distance of a vascular branch may be determined by calculating a distance between vascular nodes delimiting the branch (end-nodes or non-terminal nodes or combination of both) depending on pixels'/voxels' size forming the branch. Real distance may be calculated for all or part of the previously determined vascular branches.

Tortuosity of a vascular branch may be determined depending on the Euclidean distance and the real distance of the vascular branch. In particular, tortuosity may be calculated based on following rule: Tortuosity = (Dr / De) - 1, wherein Dr is the real distance of the branch and De is the Euclidean distance of the branch. Tortuosity may be calculated for all or part of the previously determined vascular branches.

Radius associated to a pixel/voxel of the centerline-based skeleton may be calculated in such a manner that all the radii calculated for all pixels/voxels forming the centerline-based skeleton define a structure of tubular branches modelling (or representing or corresponding to) the vascular structure. Said radii may be calculated from the segmented digital medical image 108 assuming, e.g., that the centerline-based skeleton has come or has been derived from the segmented digital medical image 108 and their superposition with each other defines outermost pixels/voxels in the segmented digital medical image 108 with respect centreline's pixels/voxels. Taking this into account, radii associated to skeleton's pixels/voxels may be calculated based on said outermost pixels/voxels of the segmented digital medical image 108 with respect to centerline pixels/voxels. Such radii at pixel/voxel level may also be denominated "pixel/voxel associated radii" herein.

Once radii associated to pixels/voxels of the centerline-based skeleton have been calculated, an average of the calculated radii associated to the pixels/voxels forming a vascular branch/node may also be computed. Radii average may be calculated for all or part of the previously determined vascular branches/nodes. Said radii may also be denominated "branch/node average radii" herein.

An area or volume of the vascular structure in the first ROI or VOI and in the second ROI or VOI may be calculated based on multiplying pixel's/voxel's dimension (or area/volume) by quantity of vascular pixels/voxels (determined in the segmenting of the digital medical image) falling in the first ROI or VOI and in the second ROI or VOI. Said type of areas/volumes may also be denominated "vascular area/volume in ROI/VOI" herein.

A fractal dimension of the vascular structure in the first ROI or VOI and in the second ROI or VOI may also be calculated based on a box-counting method considering the vascular pixels or voxels (determined in the segmenting of the digital medical image) falling in the first ROI or VOI and in the second ROI or VOI. Said type of fractal dimensions may also be denominated "vascular fractal dimension in ROI/VOI" herein.

In cases where the digital medical image 105 is dynamic and, therefore, includes time dimension, blood flow through the vascular structure may be quantified in different segments (or sections or parts or regions) thereof. Then, said quantified vascular segments may be identified in the brain vascular model and may be accordingly labelled depending on its quantified blood flow, i.e., in one or another manner depending on its quantified blood flow. Each of said vascular segments may correspond to one or more adjacent vascular pixels/voxels in the skeleton. The labelling of the identified vascular segments may be a colour-renderable labelling, in such a manner that each of the labels is renderable in one or another colour depending on the quantified blood flow. This labelling may permit, e.g., constructing a blood flow map of the vascular structure. Said type of vascular feature may be simply denominated "quantified blood flow" herein.

Comparator module 104 may be configured to receive the vascular model with ROIs/VOIs 109 and to compare modelled vascular features in the first ROI or VOI with modelled vascular features in the second ROI or VOI. This comparison may include a symmetry comparison to detect symmetry abnormalities or differences or coincidences or any combination thereof. Result(s) of said comparison 110 may include, e.g., a graphical representation of (e.g., symmetry) differences and/or coincidences, which may be coloured or non-coloured, a text-based and/or number-based description of differences and/or coincidences, etc. Number-based description may include quantified differences and/or coincidences in absolute and/or proportional terms. Result(s) of the comparison 110 may then be provided to competent doctor for diagnosis purposes or the like.

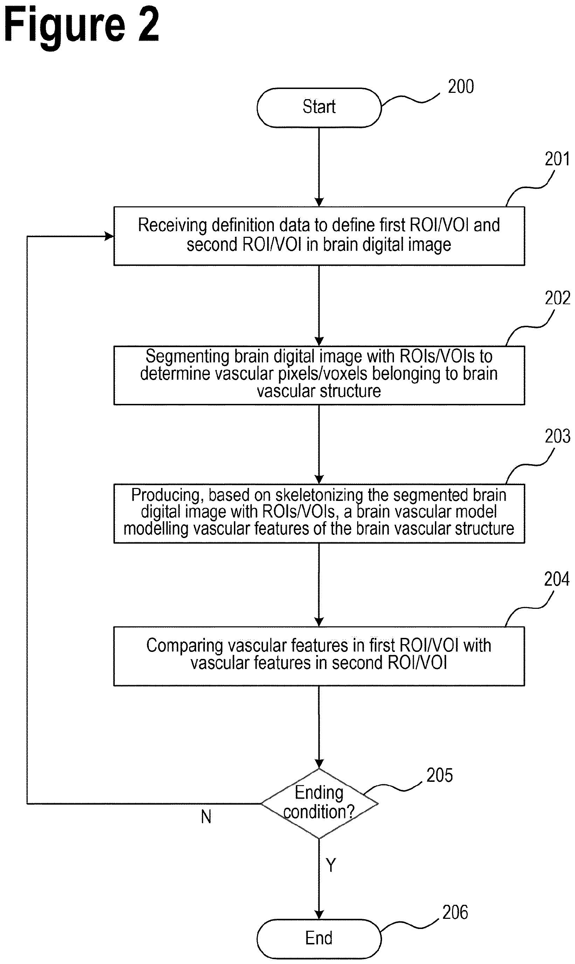

Figure 2 is a flow chart schematically illustrating (exploring) methods of digitally exploring a vascular structure of a brain represented in a digital medical image, according to examples. As shown in the figure, exploring methods may be initiated (e.g., at block 200) upon detection of a starting condition such as, e.g., a user request to start the exploring method. Since exploring methods according to Figure 2 are performable by or at exploring systems according to, e.g., Figure 1, number references from Figure 1 may be reused in following description of Figure 2.

Exploring methods may further include (e.g., at method-block 201) receiving definition data 106 (from, e.g., a user) to define first ROI or VOI and second ROI or VOI in the brain digital medical image 105. This receiving functionality implemented or implementable at method-block 201 may be performed by, e.g., receiver module 101 previously described with reference to Figure 1. Functional details and considerations explained about said receiver module 101 may thus be similarly attributed or attributable to method-block 201.

Exploring methods may still further include (e.g., at method-block 202) segmenting the digital medical image with ROIs/VOIs 107 (from, e.g., previous method-block 201) to determine vascular pixels or voxels corresponding to those pixels or voxels belonging to the vascular structure in the digital medical image 107. This segmenting functionality implemented or implementable at method-block 202 may be performed by, e.g., segmenter module 102 previously described with reference to Figure 1. Functional details and considerations explained about said module 102 may thus be similarly attributed or attributable to method-block 202.

Exploring methods may yet further include (e.g., at method-block 203) producing a brain vascular model modelling the vascular structure, said modelling based on skeletonizing the segmented digital medical image with ROIs/VOIs 108 (from, e.g., previous method-block 202). This modelling functionality implemented or implementable at method-block 203 may be performed by, e.g., modeller module 103 previously described with reference to Figure 1. Functional details and considerations explained about said module 103 may thus be similarly attributed or attributable to method-block 203.

Exploring methods may furthermore include (e.g., at method-block 204) comparing modelled vascular features in the first ROI or VOI with modelled vascular features in the second ROI or VOI. This comparing functionality implemented or implementable at method-block 204 may be performed by, e.g., comparator module 104 previously described with reference to Figure 1. Functional details and considerations explained about said module 104 may thus be similarly attributed or attributable to method-block 204.

Exploring methods may additionally include (e.g., at decision block 205) verifying whether an ending condition occurs or is satisfied. In case of positive or true result (Y) of said verification, exploring method may proceed to method-block 206 to terminate execution of the exploring method. Otherwise (N), exploring method may loop back to previous method-block 201 to initiate a new digital exploration of the brain vascular structure with, e.g., newly defined first and second ROIs/VOIs. Ending condition satisfaction may be determined by detecting, e.g., that user request for ending the exploring method has been issued. Termination of the exploring method may include, e.g., providing comparison result 110 to user/operator of the exploring method who may be, e.g., a competent doctor or medical practitioner/staff.

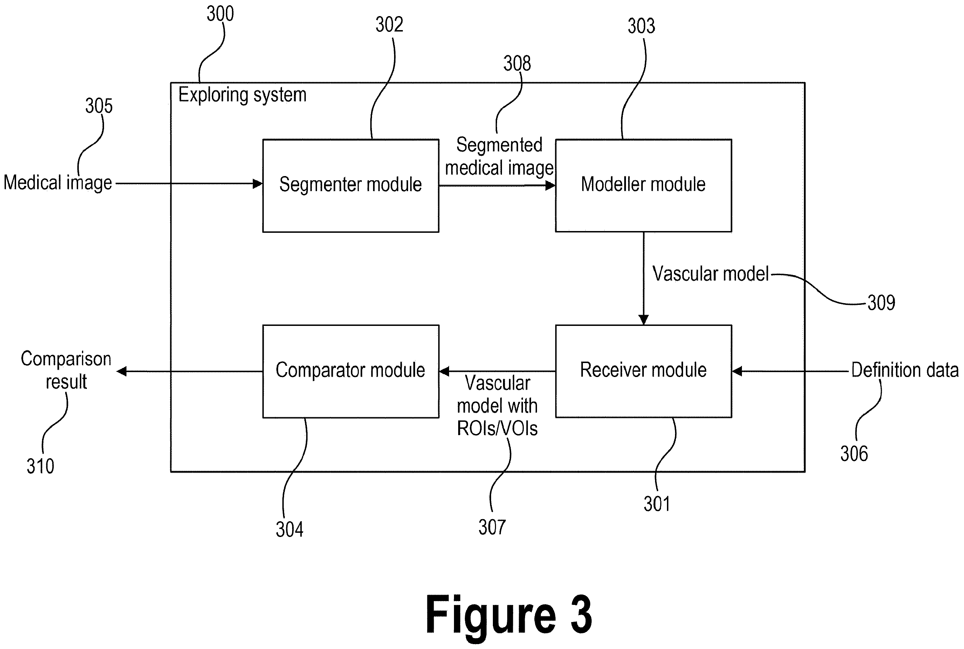

Figure 3 is a block diagram schematically illustrating other (exploring) systems 300 for digitally exploring a brain vascular structure according to examples. These exploring systems 300 may be similar to exploring systems 100 according to Figure 1.

Segmenter module 302 may be similar to segmenter 102 but differing in that the segmenter 302 is configured to segment the digital medical image (without ROIs/VOIs) 305 to output segmented digital medical image (without ROIs/VOIs) 308, while the segmenter 102 is configured to segment the digital medical image with ROIs/VOIs 107.

Modeller module 303 may be similar to modeller 103 but differing in that the modeller 303 is configured to produce vascular model (without ROIs/VOIs) 309, while the modeller 103 is configured to produce the vascular model with ROIs/VOIs 109.

Receiver module 301 may be similar to receiver 101 but differing in that the receiver 301 is configured to receive definition data 306 to define ROIs/VOIs in/on vascular model 309 to output vascular model with ROIs/VOIs 307, while the receiver 101 is configured to receive definition data 106 to define ROIs/VOIs in/on the brain digital medical image 105.

Comparator module 304 may be same or similar as comparator module 104, with no significant differences in the sense that both are configured to compare ROIs/VOIs in vascular model. Comparison results 310 may also be functionally same or similar as results 110.

In brief, main difference between exploring systems 300 and exploring systems 100 may be that in system 300 definition of ROIs/VOIs is performed in/on vascular model 309, while in system 100 definition of ROIs/VOIs is performed in/on digital medical image 105.

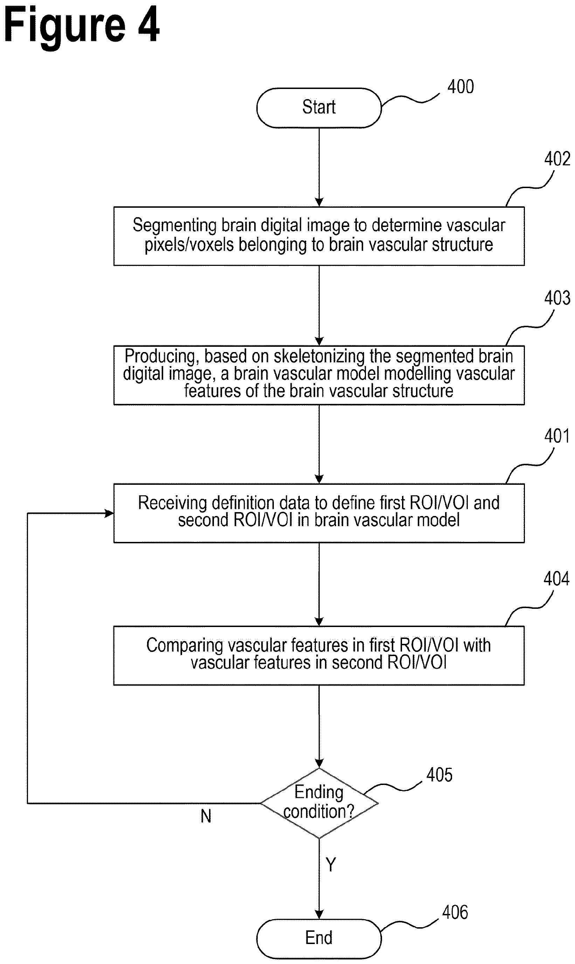

Figure 4 is a flow chart schematically illustrating other (exploring) methods of digitally exploring a vascular structure of a brain according to examples. These exploring methods may be similar to exploring methods according to Figure 2 and may be performed by/at exploring systems according to Figure 3.

According to Figure 4, exploring methods may be initiated (e.g., at block 400) upon detection of a starting condition such as, e.g., a user request to start the exploring method in same or similar manner as explained in relation to method-block 200 of Figure 2.

Exploring methods may further include (e.g., at method-block 402) segmenting the digital medical image 305 in same or similar manner as explained in relation to method-block 202 of Figure 2 but, in this case, with no ROIs/VOIs defined in/on the digital medical image 305. Since this segmenting is performable at/by segmenter module 302 previously described according to Figure 3, functional details and considerations explained about said segmenter 302 may thus be similarly attributable to method-block 402.

Exploring methods may still further include (e.g., at method-block 403) producing brain vascular model 309 in same or similar manner as explained in relation to method-block 203 of Figure 2 but, in this case, with no ROIs/VOIs defined in/on the brain vascular model 309. Since this modelling is performable at/by modeller module 303 previously described according to Figure 3, functional details and considerations explained about said modeller 303 may thus be similarly attributable to method-block 403.

Exploring methods may yet further include (e.g., at method-block 401) receiving definition data to produce brain vascular model with defined ROIs/VOIs 307 in same or similar manner as explained in relation to method-block 201 of Figure 2 but, in this case, with such a definition of ROIs/VOIs performed in/on the brain vascular model 309. Since this definition of ROIs/VOIs is performable at/by receiver module 301 previously described according to Figure 3, functional details and considerations explained about said receiver module 301 may thus be similarly attributable to method-block 401.

Exploring methods may furthermore include (e.g., at method-block 404) comparing ROIs/VOIs in/on vascular model 307 in same or similar manner as explained in relation to method-block 204 of Figure 2. Since this comparing is performable at/by comparator module 304 previously described according to Figure 3, functional details and considerations explained about said comparator 304 may thus be similarly attributable to method-block 404.

Exploring methods may additionally include (e.g., at decision block 405) verifying whether ending condition is satisfied. In case of positive or true result (Y) of said verification, exploring method may proceed to method-block 406 to terminate execution of the exploring method in same or similar manner as methods according to Figure 2. Otherwise (N), exploring method may loop back to previous method-block 401 to initiate a further digital exploration of the brain vascular structure by, e.g., defining new ROIs/VOIs in/on the vascular model 309 instead of the digital medical image 305 as performed in methods according to Figure 2. Ending condition and method termination may be same or similar as the ones of methods according to Figure 2.

As used herein, the term "module" or "unit" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding exploring systems proposed herein, and/or to other components that may be local or remote to one another. Additionally, the modules may be moved from one device and added to another device, and/or may be included in both devices, associated to corresponding exploring systems proposed herein. Any software implementations may be tangibly embodied in one or more storage media, such as, e.g., a memory device, a floppy disk, a compact disk (CD), a digital versatile disk (DVD), or other devices that may store computer code.

Exploring systems according to present disclosure may be implemented by computing means, electronic means or a combination thereof. The computing means may be a set of instructions (e.g., a computer program) and then exploring systems may comprise a memory and a processor, embodying said set of instructions stored in the memory and executable by the processor. These instructions may comprise functionality or functionalities to execute corresponding exploring methods such as, e.g., the ones described in other parts of the disclosure.

In exploring systems implemented only by electronic means, a controller of the system may be, for example, a CPLD (Complex Programmable Logic Device), an FPGA (Field Programmable Gate Array) or an ASIC (Application-Specific Integrated Circuit).

In exploring systems that are a combination of electronic and computing means, the computing means may be a set of instructions (e.g., a computer program) and the electronic means may be any electronic circuit capable of implementing corresponding steps of exploring methods proposed herein, such as those described in other parts of the disclosure.

The computer program(s) may be embodied in/on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing exploring methods according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, exploring methods proposed herein.

Although only a number of examples have been disclosed herein, other alternatives, modifications, uses and/or equivalents thereof are possible. Furthermore, all possible combinations of the described examples are also covered. Thus, the scope of the disclosure should not be limited by particular examples, but it should be determined only by a fair reading of the claims that follow.

## Claims

1. Method of digitally exploring a vascular structure of a brain, the method comprising:
segmenting a digital medical image of the brain to determine vascular pixels or voxels which are those pixels or voxels belonging to the vascular structure in the digital medical image;
producing, based on skeletonizing the segmented digital medical image, a brain vascular model modelling vascular features of the vascular structure;
receiving definition data from a user to define a first Region of Interest, ROI, or Volume of Interest, VOI, and a second ROI or VOI in either the digital medical image or the brain vascular model; and
comparing vascular features in the first ROI or VOI with vascular features in the second ROI or VOI.

2. Method of digitally exploring a brain vascular structure according to claim 1, wherein the receiving of the definition data from the user to define the first ROI or VOI and the second ROI or VOI in the digital medical image is performed before the segmenting of the digital medical image; and wherein
the defined first ROI or VOI and second ROI or VOI are preserved in the segmenting of the digital medical image, the producing of the brain vascular model and the comparing of vascular features.

3. Method of digitally exploring a brain vascular structure according to claim 1, wherein the receiving of the definition data from the user to define the first ROI or VOI and the second ROI or VOI in the brain vascular model is performed after the producing of the brain vascular model and before the comparing of vascular features.

4. Method of digitally exploring a brain vascular structure according to any of claims 1 to 3, wherein the receiving of the definition data from the user to define the first ROI or VOI and the second ROI or VOI includes either:
receiving freestanding data to define the first ROI or VOI in standalone manner and relative data to define the second ROI or VOI relatively to the defined first ROI or VOI; or
receiving first standalone data to define the first ROI or VOI in standalone manner and second standalone data to define the second ROI or VOI in standalone manner.

5. Method of digitally exploring a brain vascular structure according to claim 4, wherein the brain has two hemispheres, the freestanding data includes data specifying that the first ROI or VOI is in one of the hemispheres, and the relative data includes data specifying that the second ROI or VOI corresponds to a ROI or VOI equivalent to the first ROI or VOI but in the other hemisphere.

6. Method of digitally exploring a brain vascular structure according to any of claims 1 to 5, wherein the comparing of vascular features includes:
performing a symmetry comparison between the vascular features in the first ROI or VOI and the vascular features in the second ROI or VOI.

7. Method of digitally exploring a brain vascular structure according to any of claims 1 to 6, wherein the digital medical image is a dynamic medical image representing blood flow through the vascular structure, and the method further comprises:
quantifying the blood flow in vascular segments or sections of the vascular structure from the dynamic medical image;
identifying in the brain vascular model each of the different vascular segments or sections whose blood flow has been quantified; and
labelling each of the identified vascular segments or sections of the brain vascular model with a label denoting its quantified blood flow.

8. Method of digitally exploring a brain vascular structure according to claim 7, wherein the labelling of the identified vascular segments or sections is a colour-renderable labelling, in such a manner that each of the labels is renderable in one or another colour depending on its quantified blood flow.

9. Method of digitally exploring a brain vascular structure according to any of claims 1 to 8, wherein the producing of the brain vascular model includes:
determining a centerline-based skeleton of the vascular structure from the segmented digital medical image;
determining vascular features of the vascular structure from the determined centerline-based skeleton and/or from the segmented digital medical image; and
producing the brain vascular model from the determined vascular features.

10. Method of digitally exploring a brain vascular structure according to claim 9, wherein the determining of vascular features includes:
determining vascular end-nodes in the centerline-based skeleton based on assuming that a pixel/voxel belongs to a vascular end-node if said pixel/voxel has just one neighbouring or adjacent pixel/voxel within the centerline-based skeleton; and/or
determining vascular non-terminal nodes in the centerline-based skeleton based on assuming that a pixel/voxel belongs to a vascular non-terminal node if said pixel/voxel has more than two neighbouring or adjacent pixels/voxels within the centerline-based skeleton; and/or
determining vascular branches in the centerline-based skeleton based on assuming that a pixel/voxel belongs to a vascular branch if said pixel/voxel has just two neighbouring or adjacent pixels/voxels within the centerline-based skeleton.

11. Method of digitally exploring a brain vascular structure according to claim 10, wherein the determining of vascular features includes:
calculating, for each of all or part of the determined branches, a Euclidean distance of the branch corresponding to a straight-line distance between vascular nodes delimiting the branch; and/or
calculating, for each of all or part of the determined branches, a real distance of the branch corresponding to a distance between vascular nodes delimiting the branch depending on size of all the pixels/voxels forming the branch; and/or
calculating, for each of all or part of the determined branches, a tortuosity of the branch depending on the determined Euclidean distance and real distance of the branch.

12. Method of digitally exploring a brain vascular structure according to claim 11, wherein the calculating of the tortuosity includes:
calculating the tortuosity of the branch based on following rule:
Tortuosity = (D, / Dₑ) - 1, wherein Dᵣ is the real distance of the branch and Dₑ is the Euclidean distance of the branch.

13. Method of digitally exploring a brain vascular structure according to any of claims 9 to 12, wherein the determining of vascular features further includes:
calculating, for each of the pixels/voxels forming the centerline-based skeleton, a radius associated to the pixel/voxel in such a manner that all the calculated radii define a structure of tubular branches representing the vascular structure, said radii being calculated from the segmented digital medical image.

14. Method of digitally exploring a brain vascular structure according to claim 13, wherein the determining of vascular features further includes:
calculating, for each of all or part of the determined branches, an average of the calculated radii associated to the pixels/voxels forming the branch.

15. Method of digitally exploring a brain vascular structure according to any of claims 9 to 14, wherein the determining of vascular features further includes:
calculating, for each of the first ROI or VOI and second ROI or VOI, an area or volume of the vascular structure in the ROI or VOI based on multiplying a pixel's or voxel's dimension by a number of the vascular pixels or voxels determined in the segmenting of the digital medical image that fall within the ROI or VOI; and/or
calculating, for each of the first ROI or VOI and second ROI or VOI, a fractal dimension of the ROI or VOI based on a box-counting method considering the vascular pixels or voxels determined in the segmenting of the digital medical image that fall within the ROI or VOI.
